# FASCICULE DE BREVET EUROPEEN

(11) **EP 3 700 849 B1**
(45) Date de publication et mention de la délivrance du brevet: **25.06.2025**
(21) Numéro de dépôt: 18800730.6
(22) Date de dépôt: 26.10.2018
(51) Int. Cl.: B65H 54/02, B65H 54/10, B65H 75/14, B29D 30/00, B29D 30/38, B29D 30/70, B60C 9/00, B60C 9/20

(54) **PROCÉDÉ DE FABRICATION D'UN COMPOSITE ÉLASTOMÈRIQUE**
VERFAHREN ZUR HERSTELLUNG EINES ELASTOMERVERBUNDSTOFFS
METHOD FOR MANUFACTURING AN ELASTOMER COMPOSITE

(30) Priorité: 27.10.2017 FR 1760135
(43) Date de publication de la demande: 02.09.2020
(73) Titulaire: Compagnie Générale des Etablissements Michelin, 63000 Clermont-Ferrand (FR)
(72) Inventeur: CHAUVET, Cedric, 63040 Clermont-Ferrand Cedex 9 (FR); DAVAYAT, Gaetan, 63040 Clermont-Ferrand Cedex 9 (FR); COLIN, Eric, 63040 Clermont-Ferrand Cedex 9 (FR); LAUBY, Lucas, 63040 Clermont-Ferrand Cedex 9 (FR)
(74) Mandataire: M.F.P. Michelin
(86) Numéro de dépôt international: PCT/FR2018/052658
(87) Numéro de publication internationale: WO 2019/081862

(56) Documents cités:
- EP-A2- 1 295 836
- WO-A1-03/031207
- CN-U- 203 512 979
- FR-A1- 2 077 770
- FR-A1- 2 707 553
- US-A- 4 566 261

## Description

La présente invention concerne un procédé de fabrication d'un composite élastomérique utilisable notamment au cours d'un procédé de fabrication de pneumatiques.

Un pneumatique est obtenu par l'assemblage puis la cuisson d'une ébauche de pneumatique. L'ébauche de pneumatique comprend une pluralité de composants élastomériques crus, prenant la forme de nappes. Un tronçon longitudinal d'une nappe est disposé circonférentiellement sur l'ébauche de pneumatique en cours de fabrication, puis les deux extrémités du tronçon sont aboutées.

Une nappe est éventuellement renforcée par des monofilaments métalliques. Par la suite, on emploiera indifféremment les expressions « nappe renforcée » ou « composite élastomérique ». Les monofilaments sont généralement disposés à l'intérieur de la nappe, dans un même plan lorsque la nappe est posée à plat, parallèlement les uns aux autres et espacés régulièrement. Ils peuvent également être inclinés, de telle sorte qu'ils forment un angle donné avec la direction longitudinale de la nappe.

La fabrication d'une nappe renforcée comprend notamment des étapes d'enroulage et de stockage d'une pluralité de monofilaments sur une pluralité de bobines. Un tour de monofilament enroulé sur une bobine est appelé une spire. L'ensemble des spires est appelé un enroulement. Puis, la fabrication de la nappe renforcée comprend une étape pendant laquelle cette pluralité de monofilaments est déroulée de la pluralité de bobines. Les monofilaments sont ensuite disposés, comme décrit précédemment, parallèlement à la direction longitudinale de la nappe en cours de fabrication, puis noyés dans une couche de gomme crue selon un procédé de calandrage ou d'extrusion. Une nappe renforcée comprenant des monofilaments formant un angle donné avec la direction longitudinale, est obtenue en découpant selon un biseau de l'angle donné et à intervalle régulier une nappe obtenue à l'issue de l'étape de noyage, puis en assemblant les découpes par leurs bords non découpés.

Une bobine comprend un moyeu et deux flasques. Les dimensions de la bobine constituent un compromis entre la quantité de monofilament dont on souhaite disposer et qui tend à maximiser les dimensions, et les contraintes liées à l'utilisation d'un procédé ou au transport de la bobine qui tendent à les minimiser. Les dimensions sont par conséquent standardisées et appliquées par les industriels du domaine. Dans le domaine pneumatique, pour un monofilament de diamètre allant de 0,05 mm à 0,60 mm, on utilise une bobine standard dont le moyeu comprend un cylindre de section circulaire de rayon égal à 59 mm.

Le stockage du monofilament sur une bobine provoque une déformation plastique du monofilament. En effet, la trajectoire formée par le monofilament, déroulé de la bobine à l'issue du stockage et libre de toute contrainte externe, est légèrement curviligne. Le défaut de rectitude, mesuré selon une méthode qui sera décrite dans la suite de la description, est appelé le cintre.

Le cintre consécutif au stockage du monofilament sur la bobine peut être caractérisé localement par un rayon de courbure de signe constant, et un rayon de courbure décroissant à mesure que l'on déroule le monofilament. L'enroulage du monofilament en hélice sur la bobine génère une déformation par torsion du monofilament très faible. On considère un tronçon du monofilament déroulé de 60 cm, libre de toute contrainte. Le tronçon du monofilament est sensiblement contenu dans un plan et forme un arc. Ce plan est identique tout le long du monofilament déroulé et parallèle à un plan axial de la bobine. A titre d'exemple, la flèche de l'arc formé par le tronçon du monofilament stocké sur une bobine standard va jusqu'à 12 cm.

Le cintre d'une pluralité de monofilaments a pour conséquence des défauts de forme de la nappe renforcée dans laquelle le ou les éléments filaires sont disposés, telles des ondulations, des vrilles, du rebiquage, un découpage en tronçons de la nappe imprécis, ou encore une disposition et un aboutage difficile d'un tronçon de la nappe sur l'ébauche de pneumatique.

Si la pose manuelle d'une nappe présentant des défauts de forme est possible, elle n'est envisageable que pour la fabrication d'un nombre limité de pneumatiques en raison de sa mauvaise productivité industrielle. En mode automatisé, la pose d'une nappe présentant des défauts de forme au-delà d'un certain seuil s'avère difficile voire impossible.

Une solution envisageable est l'insertion d'une opération de déformation opposée d'un monofilament, après son déroulage de la bobine. Ainsi, le cintre du monofilament peut être atténué par une déformation de courbure opposée dans le même plan, lors d'une étape appelée « retordage » et/ou lors d'une nouvelle étape d'enroulage et de stockage.

Cependant, plus le monofilament est enroulé proche du moyeu de la bobine, plus le cintre consécutif au stockage du monofilament croît. Autrement dit, le cintre consécutif au stockage n'est pas constant le long du monofilament, tandis que le retordage imprime au fil un rayon courbure de signe opposé mais constant. Par conséquent, si le retordage permet bien d'atténuer le cintre moyen du monofilament et le cintre du monofilament proche du moyeu de la bobine, il peut amplifier le cintre du monofilament éloigné du moyeu.

De la même façon, lors d'une nouvelle étape d'enroulage et de stockage d'un monofilament en vue de lui conférer un cintre opposé, le monofilament éloigné du moyeu à l'issue de la première étape de stockage, se retrouvent à proximité du moyeu lors de la seconde étape de stockage et vice versa, ce qui ne permet pas une atténuation de cintre moyen sur l'ensemble de l'enroulement.

Le document WO 03/031207 A1 décrit un procédé de fabrication d'un composite élastomérique incluant une pluralité de monofilaments métalliques noyés dans une matrice d'élastomère.

Un objectif de l'invention est de remédier aux inconvénients de l'état de la technique et d'apporter une solution originale pour réduire les défauts de forme d'un composite élastomérique cru renforcé de monofilaments métalliques, tout en permettant la pose d'un tel composite en mode automatisé.

Cet objectif est atteint par l'invention qui propose un procédé de fabrication d'un composite élastomèrique, **caractérisé en ce que** le procédé comprend les étapes suivantes :
enrouler une pluralité de monofilaments métalliques de section sensiblement circulaire et de diamètre Df allant de 0,05 mm à 6 mm sur une pluralité de bobines de stockage, chaque bobine présentant un axe de révolution et comprenant un moyeu définissant un gabarit cylindrique de rayon de courbure Rm dans le plan axial, sensiblement axialement constant, ledit rayon de courbure Rm étant supérieur à 59 mm, chaque monofilament métallique étant enroulé autour du moyeu de chaque bobine de stockage,
stocker la pluralité de bobines, chaque bobine comprenant un enroulement d'un des monofilaments métalliques,
dérouler la pluralité de monofilaments métalliques de la pluralité de bobines,
disposer la pluralité de monofilaments métalliques parallèlement les uns aux autres,
noyer la pluralité de monofilaments métalliques dans une matrice d'élastomère de manière à former le composite élastomérique.

Les mesures réalisées par les inventeurs permettent d'établir que, au-delà d'une certaine durée de stockage à partir de laquelle le cintre consécutif au stockage devient significatif, il existe une relation entre le diamètre d'une quelconque spire de l'enroulement du monofilament sur la bobine et le cintre du monofilament déroulé de la bobine et libre de toutes contraintes, à l'endroit de la spire. En effet, le cintre consécutif au stockage croit à mesure que le diamètre de la spire diminue et tend vers celui du moyeu. On en conclut que toute bobine comportant un moyeu de rayon de courbure supérieur au rayon de courbure du moyeu d'une bobine standard, permet de réduire le cintre qui est mesuré sur les spires proches du moyeu, et le cintre moyen de tout l'enroulement du monofilament sur la bobine, et pas seulement le cintre d'une partie de l'enroulement comme c'est le cas dans l'état de la technique.

Le cintre consécutif au stockage d'un monofilament métallique est plus important que le cintre consécutif au stockage d'un câble métallique. Ainsi, enrouler un monofilament métallique autour d'une bobine telle que décrite précédemment s'avère particulièrement avantageux afin de réduire le cintre du monofilament et les défauts de forme de la nappe renforcée.

Les mesures réalisées par les inventeurs permettent d'établir que, plus la durée de stockage est grande, plus le cintre est important et qu'au-delà d'une certaine durée de stockage, le cintre devient trop important pour la fabrication des nappes renforcées à cadences industrielles élevées. L'étape de stockage succédant à celle d'enroulage du monofilament est donc, par sa durée, en partie à l'origine de la déformation plastique du monofilament. Le stockage du monofilament sur une bobine telle que décrite précédemment permet donc de réduire le cintre consécutif au stockage.

L'utilisation du procédé d'enroulage dans un procédé de fabrication d'un composé élastomérique, ou autrement dit, d'une nappe renforcée permet de diminuer les défauts de forme de la nappe, telles des ondulations ou des vrilles, un découpage en tronçons de la nappe imprécise.

De préférence, le monofilament métallique est de section sensiblement circulaire et de diamètre Dm allant de 0,05 mm à 0,50 mm, de préférence de diamètre Dm allant de 0,18 mm à 0,42 mm, plus préférentiellement de diamètre Dm allant de 0,28 mm à 0,42 mm. Ainsi, la bobine permet de stocker des monofilaments métalliques de différents diamètres, représentatifs des diamètres Dm de monofilaments particulièrement adaptés à la fabrication de pneumatiques.

De préférence, le monofilament métallique comprend une âme en acier. On entend par âme que la partie centrale du monofilament métallique est monolithique ou autrement dit, constituée d'un seul bloc. L'utilisation d'un monofilament en acier offre un bon compromis entre les propriétés mécaniques requises pour le pneumatique et la faisabilité des monofilaments.

De préférence, le monofilament métallique comprend une couche d'un revêtement métallique revêtant directement au moins en partie l'âme en acier du ou de chaque monofilament métallique. En effet, un revêtement métallique peut améliorer les propriétés de mise en œuvre du monofilament ou les propriétés d'usage du monofilament et/ou du pneumatique eux-mêmes, telles que les propriétés d'adhésion, de résistance à la corrosion ou encore de résistance au vieillissement. De préférence, le métal de la couche du revêtement métallique revêtant directement au moins une partie de l'âme en acier du ou de chaque monofilament métallique est choisi parmi le zinc, le cuivre, l'étain et les alliages de ces métaux.

Avantageusement, la tension d'enroulage du monofilament métallique sur la bobine est inférieure ou égale à 1 daN, de préférence 0,8 daN, plus préférentiellement 0,6 daN et encore plus préférentiellement 0,5 daN. En effet, une tension d'enroulage excessive peut occasionner la destruction de la bobine sous l'effet de la pression exercée par l'enroulement sur le moyeu de la bobine.

De préférence, la vitesse d'enroulage du monofilament métallique sur la bobine va de 30 m.min⁻¹ à 1200 m.min⁻¹, de préférence de 50 m.min⁻¹ à 1000 m.min⁻¹. Une telle plage de vitesse permet de satisfaire aux critères industriels requis lors de l'enroulage d'un monofilament.

Dans une première variante, le monofilament métallique défilant au contact d'un organe de défilement, cet organe de défilement étant le dernier organe de défilement agencé en amont de la bobine dans le sens de défilement du monofilament métallique, on enroule le monofilament métallique sur la bobine de façon à inverser le signe de la courbure du monofilament métallique entre l'organe de défilement et la bobine.

La fabrication du monofilament provoque également un défaut de rectitude du monofilament. Comme pour le cintre consécutif au stockage, le cintre consécutif à la fabrication, peut être caractérisé localement par un rayon de courbure de signe généralement constant. La fabrication du monofilament génère une déformation par torsion du monofilament très faible. On considère un tronçon du monofilament avant enroulage d'environ 60 cm, libre de toute contrainte. Le tronçon de fil est sensiblement contenu dans un plan et forme un arc. Ce plan est identique tout le long du monofilament avant enroulage, et les moyens de défilement agencés en amont de la bobine permettent d'orienter le monofilament de telle sorte que le plan dans lequel serait contenu le cintre, soit parallèle à un plan axial de la bobine. A titre d'exemple, la flèche de l'arc formé par le tronçon de fil à l'issue de sa fabrication va jusqu'à 12 cm.

Ainsi, il est possible d'enrouler le monofilament sur une bobine selon l'invention de telle sorte que le cintre du monofilament consécutif au stockage s'oppose au cintre consécutif à la fabrication du monofilament. Le cintre résultant est donc en moyenne inférieur au cintre consécutif au stockage du monofilament ne comportant pas de cintre consécutif à la fabrication.

Dans une deuxième variante de mise en œuvre, le monofilament métallique défilant au contact d'un organe de défilement, cet organe de défilement étant le dernier organe de défilement agencé en amont de la bobine dans le sens de défilement du monofilament métallique, on enroule le monofilament métallique sur la bobine de façon à conserver le signe de la courbure du monofilament métallique entre l'organe de défilement et la bobine.

Ainsi, il est possible d'enrouler le monofilament sur une bobine selon l'invention de telle sorte que le cintre du monofilament consécutif au stockage se superpose au cintre initial du monofilament. Le cintre final est donc en moyenne inférieur au cintre consécutif au stockage du monofilament sur une bobine de l'état de la technique.

De préférence, le procédé comprend, en amont de l'étape d'enroulage, l'étape suivante :
tréfiler le monofilament métallique.

Le tréfilage permet d'obtenir le diamètre souhaité du monofilament métallique à enrouler sur la bobine. Le tréfilage introduit la plupart du temps un cintre et une torsion également problématiques pour la fabrication de nappes renforcées. Un tel cintre peut être réduit grâce aux deux variantes décrites ci-dessus.

De préférence, le monofilament métallique comprenant une âme en acier, le procédé comprend, en amont de l'étape d'enroulage, l'étape suivante :
revêtir au moins en partie l'âme en acier d'une couche d'un revêtement métallique.

En effet, un revêtement métallique peut améliorer les propriétés de mise en œuvre du monofilament ou les propriétés d'usage du monofilament et/ou du pneumatique eux-mêmes, telles que les propriétés d'adhésion, de résistance à la corrosion ou encore de résistance au vieillissement.

De préférence, la matrice d'élastomère est à base d'une composition comprenant au moins un élastomère et au moins une charge.

De préférence, la composition comprend un élastomère, de préférence un élastomère diénique. Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'élastomère diénique est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères. Un mode de réalisation préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4.

La composition peut comporter un seul ou plusieurs élastomère(s) diénique(s), également tout ou partie des additifs habituellement utilisés dans les matrices destinées à la fabrication de bandages, tels que par exemple des charges comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute température de transition vitreuse (supérieure à 30°C), des agents facilitant la mise en œuvre (processabilité) des compositions à l'état cru, des résines tackifiantes, des agents anti-réversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt, de nickel ou de lanthanide, un système de réticulation ou de vulcanisation.

De préférence, le système de réticulation de la matrice polymérique est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone et/ou de la silice, est de préférence supérieur à 30 pce, notamment compris entre 30 et 100 pce.

Comme noirs de carbone conviennent tous les noirs de carbone, notamment les noirs du type HAF, ISAF, SAP conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 m2/g, de préférence de 30 à 400 m2/g.

L'homme de l'art saura, à la lumière de la présente description, ajuster la formulation des compositions de caoutchouc afin d'atteindre les niveaux de propriétés (notamment module d'élasticité) souhaités, et adapter la formulation à l'application spécifique envisagée.

De préférence, chaque matrice polymérique présente, à l'état réticulé, un module sécant en extension, à 10% d'allongement, qui est compris entre 4 et 25 MPa, plus préférentiellement entre 4 et 20 MPa ; des valeurs comprises notamment entre 5 et 15 MPa se sont révélées particulièrement convenir. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

L'invention concerne en outre un procédé de fabrication d'une ébauche de pneumatique comprenant les étapes suivantes :
fabriquer au moins un composite élastomérique selon l'invention,
enrouler le composite élastomérique sur un tambour de confection de manière à obtenir l'ébauche de pneumatique.

L'enroulage d'un composite élastomérique selon l'invention sur une ébauche de pneumatique permet de réduire les difficultés de disposition et d'aboutage d'un tronçon de la nappe renforcée sur l'ébauche de pneumatique. La fabrication d'ébauche de pneumatique est ainsi facilitée.

L'invention sera mieux comprise grâce à la suite de la description, qui s'appuie sur les figures suivantes :
- la figure 1 est une vue en coupe longitudinale d'une première variante de la bobine de stockage selon l'invention sur laquelle est enroulé un monofilament,
- la figure 2 est une vue en coupe axiale de la bobine de la figure 1,
- la figure 3 est une vue analogue à celle de la figure 1 d'une deuxième variante de la bobine de stockage selon l'invention,
- la figure 4 est une section d'un monofilament pouvant être enroulés sur la bobine de la figure 1 ou 3,
- la figure 5 est une vue d'un échantillon d'un monofilament de la figure 4,
- la figure 6 est une représentation simplifiée d'un procédé de fabrication d'un monofilament selon l'invention,
- la figure 7 représente un organigramme des étapes du procédé de fabrication d'une ébauche de pneumatique,
- la figure 8 est une représentation simplifiée d'un procédé de fabrication d'un composite élastomérique selon l'invention.

Sur les différentes figures, les éléments identiques ou similaires portent la même référence. Leur description n'est donc pas systématiquement reprise.

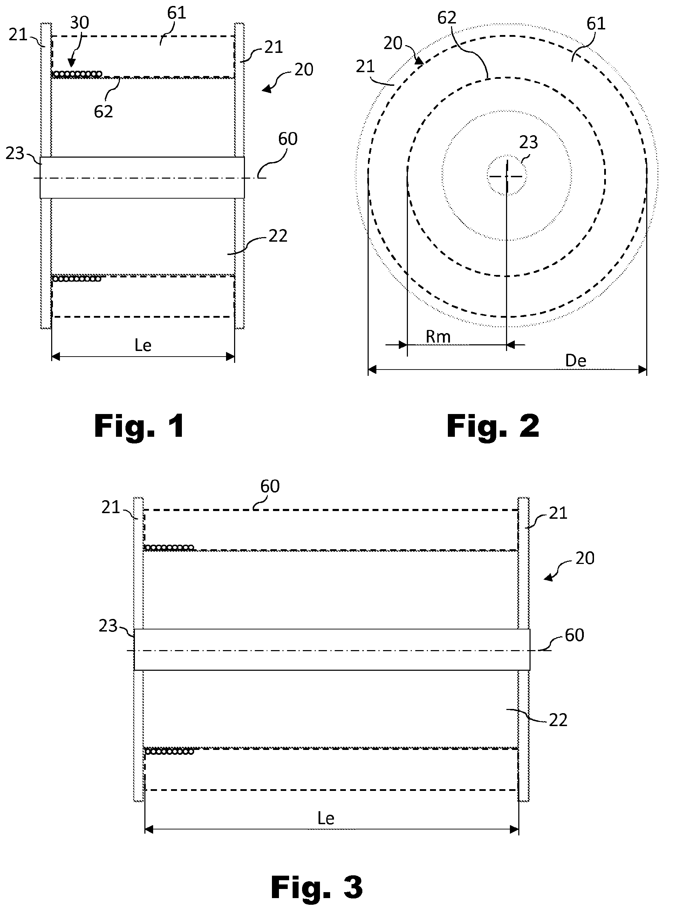

Comme l'illustrent les figures 1 à 3, l'invention est relative à une bobine 20 de stockage comprenant un axe 60 de révolution, destinée à l'enroulage d'un monofilament 30 métallique rentrant dans la fabrication d'un pneumatique.

Par coupe ou plan axial de la bobine, on comprend un plan perpendiculaire à l'axe 60 de révolution et par coupe ou plan longitudinal, on entend un plan contenant l'axe de révolution de la bobine.

Une bobine comprend deux flasques 21 et un moyeu 22 coaxiaux avec l'axe 60 de révolution. Chaque flasque 21 est fixé par une de ses parois latérales au moyeu 22. La bobine 20 présente, selon une première variante (figure 1), une dimension axiale maximale allant de 158 mm à 178 mm, de préférence de 163 mm à 173 mm, et, selon une deuxième variante (figure 3), une dimension axiale maximale allant de 320 mm à 340 mm, de préférence de 325 mm à 335 mm.

Le moyeu 22 et les flasques 21 sont traversés par un trou 23 coaxial avec l'axe 60 de révolution, destiné à être utilisé avec divers procédés, notamment lors des étapes d'enroulage et de déroulage du monofilament. La bobine 20 est un assemblage mécanosoudé de tôle en acier. Le diamètre extérieur de chaque flasque va de 250 mm à 260 mm, et de préférence de 254 mm à 256 mm d.

Le moyeu 22 définit un gabarit cylindrique de rayon de courbure Rm dans le plan axial. A titre d'exemple, le moyeu peut être réalisé par une pluralité de barreaux fixés à intervalle régulier le long d'un contour circulaire, sur chaque flasque 21. Le profil d'un barreau comprend au moins un arc de rayon constant, le barreau étant orienté de telle façon que le profil arqué réalise la surface de contact du monofilament sur le moyeu. Afin de disposer du moyeu le plus compact axialement, le moyeu comprend un cylindre de section circulaire dans un plan axial. Le rayon de courbure Rm est sensiblement axialement constant ou autrement dit, le rayon de courbure Rm est axialement constant sur au moins 90% de la longueur du moyeu.

A l'issue de sa fabrication, le monofilament 30, libre de toute contrainte extérieure, forme une trajectoire sensiblement rectiligne, et comporte une section circulaire perpendiculairement à la trajectoire. Par sensiblement rectiligne, on entend que le monofilament posé sur un plan horizontal de plusieurs mètres, demeure entre deux lignes parallèles espacées de quelques centimètres. A titre d'exemple, la longueur du plan peut être de 6 m et la distance entre les lignes de 7,5 cm selon les seuils de tolérance. Le monofilament comporte donc un léger défaut de rectitude que l'on peut caractériser localement.

Le monofilament est enroulé en spirale et par couches successives sur le moyeu. L'ensemble des spires forme un enroulement qui définit un volume 61 de remplissage du monofilament, de forme torique. Le volume 61 est délimité par le moyeu 22, les deux flasques 21 et la couche extérieure de l'enroulement constituée d'une succession axiale de spires et, est caractérisé par le rayon Rm du moyeu, le diamètre extérieur De et la longueur Le de l'enroulement. Le diamètre extérieur De est inférieur ou égal à 235 mm et de préférence à 230 mm, et la longueur axiale Le, dite de remplissage, selon la première variante, va de 150 mm à 160 mm, de préférence de 153 mm à 155 mm, et selon la deuxième variante, de 310 mm à 320 mm, de préférence de 315 mm à 317 mm.

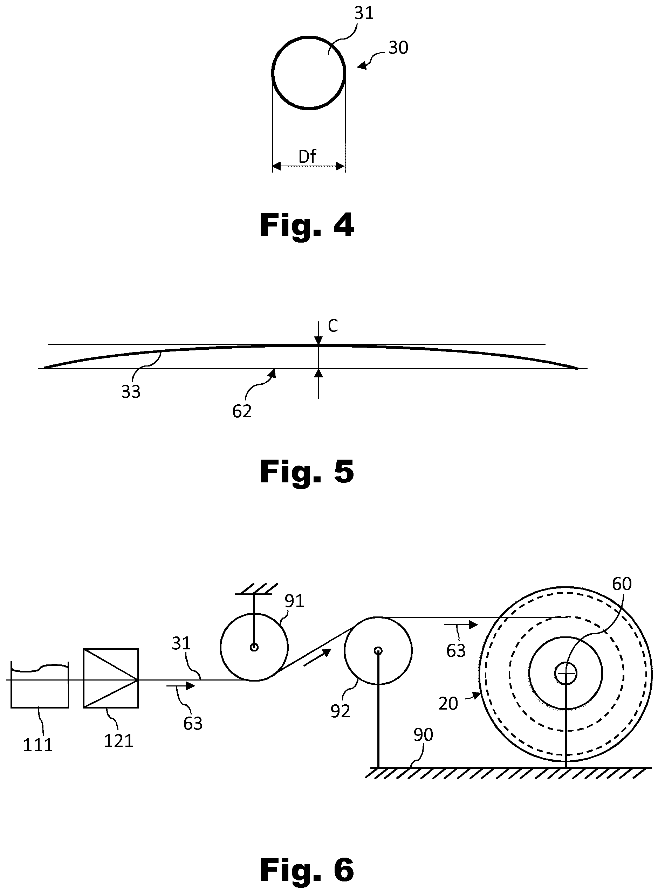

Le monofilament 30, enroulé sur le moyeu 22 de la bobine 20, est de diamètre Df allant de 0,05 mm à 6 mm. De préférence, le monofilament 30 métallique est de diamètre Df allant de 0,05 mm à 0,50 mm, plus préférentiellement de 0,18 mm à 0,42 mm, et encore plus préférentiellement de 0,28 mm à 0,42 mm (figure 4).

Le stockage prolongé du monofilament 30 sur la bobine 20 et les conditions de stockage, telle la température, provoquent une déformation plastique du monofilament alors même que, lors de l'enroulage, la déformation du monofilament se situe majoritairement dans un domaine de déformation élastique. La déformation plastique du monofilament est relative à la forme prise par ce dernier sur la bobine à l'issue de l'enroulage. Il en résulte un défaut de rectitude du monofilament qui définit un plan sensiblement axial, une courbure de signe constant et une variation de la courbure de signe constant.

Selon l'invention, le rayon de courbure Rm du moyeu 22, est supérieur à 59 mm. A titre d'exemple, le rayon de courbure Rm peut également vérifier Rm ≥ 65, et de préférence Rm ≥ 71 mm et encore plus préférentiellement Rm ≥ 76 mm, ou encore, 80 mm ≤ Rm ≤ 85 mm et de préférence 82 mm ≤ Rm ≤ 83 mm.

### Procédé de fabrication 100 d'un monofilament métallique.

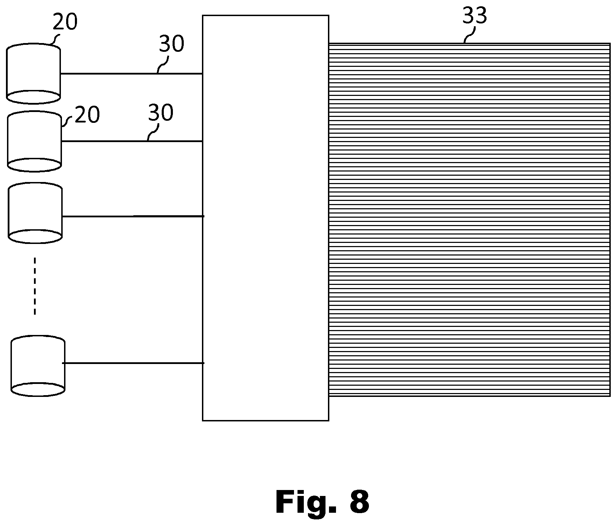

On a illustré à la figure 8, un procédé de fabrication 100 d'un monofilament métallique 30. Le monofilament défile selon une direction 63 qui va de l'amont vers l'aval.

On fabrique un monofilament métallique selon un procédé comprenant des étapes bien connues de l'homme du métier.

Le procédé comprend tout d'abord une étape de revêtement 110 au cours de laquelle l'âme en acier du monofilament est revêtu d'une couche d'un revêtement métallique, choisi parmi le zinc, le cuivre, l'étain et les alliages de ces métaux, par des moyens de revêtements 111 comprenant généralement des bains chimiques.

Ensuite, le procédé comprend une série 120 ininterrompue d'étapes de tréfilage d'un monofilament en acier de gros diamètre, afin d'obtenir un monofilament de dimensions et de propriétés mécaniques voulues, comportant une âme en acier monolithique. Le monofilament tréfilé est obtenu au moyen de filières 121. A titre d'exemple, à l'issue de la série 120 ininterrompue d'étapes de tréfilage, le monofilament a un diamètre allant de 0,05 mm à 0,6 mm et dispose d'une résistance à la rupture de 2000 à 5000 MPa.

Le monofilament métallique défile ensuite au contact de divers organes de défilement 91, 92 ayant notamment pour fonction de guider et d'entrainer le monofilament. A titre d'exemple, la tension d'enroulage du monofilament sur la bobine est inférieure ou égale à 1 daN.

Le dernier organe de défilement 92 agencé en amont de la bobine 20 a pour fonction de guider l'enroulement du monofilament sur la bobine. La bobine 20 et/ou le dernier organe de défilement 92 sont mobiles l'un par rapport à l'autre selon une direction axiale parallèle à l'axe de révolution 60, sous l'effet de moyen de trancannage.

Enfin, le monofilament est enroulé en spirale sur une bobine 20 de stockage selon un **procédé d'enroulage 130 d'un** monofilament **métallique,** puis stocké pendant une certaine durée, lors d'une étape de stockage 140.

La vitesse d'enroulage du monofilament métallique sur la bobine va de 30 m.min⁻¹ à 1200 m.min⁻¹, de préférence de 50 m.min⁻¹ à 1000 m.min⁻¹.

### Procédé de fabrication 200 d'un composite élastomérique selon l'invention

Afin de fabriquer un composite élastomérique, ou autrement dit, une nappe 33 renforcée, on fabrique une pluralité de monofilaments métalliques selon un **procédé de fabrication 100 d'un monofilament métallique.** La pluralité de monofilaments 30 est déroulé, lors d'une étape de déroulage 210, de la pluralité de bobines 20 (figure 8). La pluralité de monofilaments est ensuite disposée, lors d'une étape de 220, parallèlement les uns aux autres. La pluralité de monofilaments ainsi disposée, est noyée lors d'une étape 230, dans une matrice d'élastomère de manière à former une nappe renforcée. La nappe 33 obtenue est alors conditionnée puis stockée.

### Procédé de fabrication 300 d'une ébauche de pneumatique

La fabrication d'une ébauche de pneumatique comprend une étape de fabrication d'au moins un composite élastomérique selon un **procédé de fabrication 200 d'un composite élastomérique.** Le procédé comprend ensuite au moins une étape pendant laquelle le ou les composites élastomériques sont enroulés 310 sur un tambour de confection de manière à obtenir une ébauche de pneumatique. Plus précisément, les nappes renforcées sont disposées circulairement sur l'ébauche de pneumatique en cours de fabrication puis les deux extrémités de la nappe sont aboutées.

### Mesures et tests comparatifs

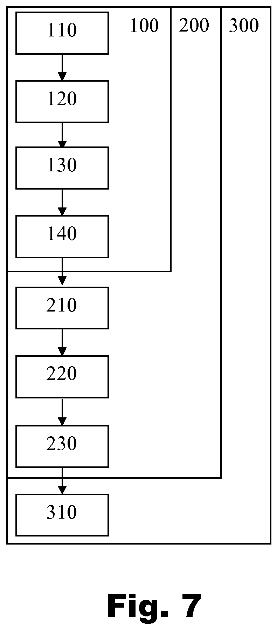

Afin de mesurer le cintre du monofilament 30 à l'issue de sa fabrication ou de son stockage, on mesure la flèche de l'arc formé par un échantillon 33 du monofilament 30. La méthode de mesure comprenant les étapes suivantes, permet de caractériser le cintre local d'un monofilament consécutivement à sa fabrication, son stockage voire son assemblage :
- découper un échantillon 33 de monofilament de longueur donnée,
- mesurer le cintre C de l'échantillon 33 du monofilament comme l'illustre la figure 7, l'échantillon de monofilament, posée sur un plan horizontal, formant sensiblement un arc, l'arc étant caractérisé par sa flèche, ou autrement dit, la distance maximale entre l'arc et la corde 62 qui le sous-tend, perpendiculairement à la corde.

Des mesures de cintre ayant pour but de déterminer la relation entre le rayon d'une quelconque spire de l'enroulement et le cintre du monofilament à l'endroit de la spire consécutif au stockage, sont réalisées.

Le plan d'expérience consiste à réaliser une pluralité de spires circulaires de rayons différents, à partir d'échantillons 33. Les échantillons sont obtenus à partir d'un monofilament 30, comportant un cintre initial consécutif à sa fabrication. Les échantillons sont ensuite disposés circulairement de manière à former une spire de rayon donné, la spire étant formée dans le plan dans lequel est contenu l'échantillon de façon à ne pas créer de cintre hors de ce plan qui viendrait fausser la mesure. La courbure donnée à l'échantillon peut être de même signe ou de signe opposé au signe de la courbure du cintre initial consécutif à sa fabrication de l'échantillon. Les échantillons sont ensuite stockés pendant une période de deux semaines dans les mêmes conditions que les bobines de fil standards.

Le tableau 1 rassemble les configurations des échantillons et les mesures de cintre réalisées. Le diamètre du monofilament est égal à 0,32 mm.

Les mesures mettent en évidence que le cintre final du monofilament décroit au fur et à mesure que le rayon de la spire augmente. On peut donc affirmer qu'un moyeu de rayon de courbure supérieur au rayon de courbure maximum du moyeu d'une bobine standard permet de réduire le cintre du monofilament.

**Tableau 1**

| Référence de la mesure | Cintre initial moyen de l'échantillon (mm) | Signe de la courbure du cintre initial de l'échantillon | Signe de la courbure du cintre final de l'échantillon | Courbure de la spire (m⁻¹) | Rayon de courbure de la spire (mm) | Cintre final - Cintre initial = Cintre consécutif au stockage (mm) |
|---|---|---|---|---|---|---|
| 1 | *60* | + | + | 17 | 59 | 38 |
| 2 | *60* | + | + | 14 | 71 | 19 |
| 3 | *60* | + | + | 11 | 91 | 14 |
| 4 | *60* | + | + | 8 | 125 | 12 |
| 5 | *60* | + | - | 17 | 59 | -29 |
| 6 | *60* | + | - | 14 | 71 | -9 |
| 7 | *60* | + | - | 11 | 91 | -6 |
| 8 | *60* | + | - | 8 | 125 | -5 |

Le tableau 1 permet de conclure qu'en prenant une bobine dont le moyeu présente un rayon de courbure Rm supérieur à 59 mm, on réduit le cintre par rapport à une bobine de l'état de la technique, ce cintre étant d'autant plus faible que le rayon de courbure est grand.

Des essais complémentaires non décrits dans la demande ont montré que la réduction du cintre du monofilament stocké était visible pour une valeur de rayon Rm ≥ 59 mm et qu'elle était déjà importante pour une valeur de rayon Rm ≥ 65 mm. D'après le tableau ci-dessus, on note que la réduction du cintre du monofilament stocké est très importante lorsque le rayon de courbure Rm vérifie Rm ≥ 71 mm. De ces résultats, on comprend qu'on peut réduire davantage le cintre en augmentant le rayon de courbure Rm.

Afin de disposer d'un cintre acceptable et de dimensions de la bobine permettant de maximiser la quantité de monofilament stockable, les inventeurs ont déterminé qu'un rayon de courbure Rm vérifiant Rm ≥ 76 mm était particulièrement adapté et, qu'avec un rayon de courbure Rm est égal à 82,5 mm, le cintre consécutif au stockage du monofilament sur la bobine était réduit de moitié tout en permettant le stockage d'une quantité optimisée du monofilament.

## Revendications

1. Procédé de fabrication (200) d'un composite élastomérique **caractérisé en ce que** le procédé comprend les étapes suivantes :
- enrouler (130) une pluralité de monofilaments métalliques (30) de section sensiblement circulaire et de diamètre Df allant de 0,05 mm à 6 mm sur une pluralité de bobines (20) de stockage, chaque bobine présentant un axe (60) de révolution et comprenant un moyeu (22) définissant un gabarit (62) cylindrique de rayon de courbure Rm dans le plan axial, sensiblement axialement constant, ledit rayon de courbure Rm étant supérieur à 59 mm, chaque monofilament métallique (30) étant enroulé autour du moyeu (22) de chaque bobine de stockage,
- stocker (140) la pluralité de bobines, chaque bobine comprenant un enroulement d'un des monofilaments métalliques (30),
- dérouler (210) la pluralité de monofilaments métalliques de la pluralité de bobines,
- disposer (220) la pluralité de monofilaments métalliques parallèlement les uns aux autres,
- noyer (230) la pluralité de monofilaments métalliques dans une matrice d'élastomère de manière à former le composite élastomérique.

2. Procédé selon la revendication précédente, dans lequel le rayon de courbure Rm du moyeu (22) est supérieur ou égal à 71 mm, de préférence supérieur ou égal à 76 mm.

3. Procédé selon l'une des revendications précédentes, **caractérisé en ce que** le rayon de courbure Rm du moyeu (22) vérifie 80 mm ≤ Rm ≤ 85 mm.

4. Procédé selon l'une des revendications précédentes, dans lequel chaque monofilament métallique est de diamètre Dm allant de 0,05 mm à 0,50 mm, de préférence Dm allant de 0,18 mm à 0,42 mm, plus préférentiellement Dm allant de 0,28 mm à 0,42 mm.

5. Procédé selon l'une quelconque des revendications précédentes, dans lequel chaque monofilament métallique comprend une âme en acier.

6. Procédé selon la revendication précédente, dans lequel chaque monofilament métallique comprend une couche d'un revêtement métallique revêtant directement au moins en partie l'âme en acier.

7. Procédé selon la revendication précédente, dans lequel le métal de la couche du revêtement métallique revêtant directement au moins en partie l'âme en acier est choisi parmi le zinc, le cuivre, l'étain et les alliages de ces métaux.

8. Procédé selon l'une quelconque des revendications précédentes, dans lequel la tension d'enroulage de chaque monofilament métallique (30) sur chaque bobine (20) est inférieure ou égale à 1 daN, de préférence 0,8 daN, plus préférentiellement 0,6 daN et encore plus préférentiellement 0,5 daN.

9. Procédé selon l'une quelconque des revendications précédentes, dans lequel la vitesse d'enroulage de chaque monofilament métallique (30) sur chaque bobine (20) va de 30 m.min⁻¹ à 1200 m.min⁻¹, de préférence de 50 m.min⁻¹ à 1000 m.min⁻¹.

10. Procédé selon l'une quelconque des revendications 1 à 9, dans lequel, chaque monofilament métallique défilant au contact d'un organe de défilement, cet organe de défilement étant le dernier organe de défilement agencé en amont de chaque bobine (20) dans le sens de défilement de chaque monofilament métallique, on enroule chaque monofilament métallique (30) sur chaque bobine (30) de façon à inverser le signe de la courbure de chaque monofilament métallique (30) entre l'organe de défilement et chaque bobine (30).

11. Procédé selon l'une quelconque des revendications 1 à 9, dans lequel, chaque monofilament métallique défile au contact d'un organe de défilement, cet organe de défilement étant le dernier organe de défilement agencé en amont de chaque bobine (20) dans le sens de défilement de chaque monofilament métallique, on enroule chaque monofilament métallique (30) sur chaque bobine (20) de façon à conserver le signe de la courbure de chaque monofilament métallique (30) entre l'organe de défilement et chaque bobine (20).

12. Procédé selon l'une quelconque des revendications précédentes, dans lequel, le procédé comprend, en amont de l'étape d'enroulage, l'étape suivante :
- tréfiler (110) la pluralité de monofilaments métalliques.

13. Procédé selon l'une quelconque des revendications précédente, dans lequel, le monofilament métallique comprenant une âme en acier, le procédé comprend, en amont de l'étape d'enroulage, l'étape suivante :
- revêtir (120) au moins en partie l'âme en acier d'une couche d'un revêtement métallique.

14. Procédé selon l'une quelconque des revendications précédentes, dans lequel la matrice d'élastomère est à base d'une composition comprenant au moins un élastomère et au moins une charge.

15. Procédé de fabrication (300) d'une ébauche de pneumatique, **caractérisé en ce qu**e le procédé comprend les étapes suivantes :
- fabriquer (200) au moins un composite élastomérique selon un procédé de fabrication (200) d'un composite élastomérique selon l'une des revendications précédentes,
- enrouler (310) le composite élastomérique sur un tambour de confection de manière à obtenir l'ébauche de pneumatique.

## Patentansprüche

1. Verfahren zur Herstellung (200) eines Elastomerverbundstoffs, **dadurch gekennzeichnet, dass** das Verfahren die folgenden Schritte umfasst:
- Aufwickeln (130) einer Mehrzahl von metallischen Monofilamenten (30) mit im Wesentlichen kreisförmigem Querschnitt und dem Durchmesser Df von 0,05 mm bis 6 mm auf eine Mehrzahl von Speicherspulen (20), wobei jede Spule eine Umdrehungsachse (60) aufweist und eine Nabe (22) umfasst, die ein zylindrisches Profil (62) mit dem Krümmungsradius Rm in der axialen Ebene definiert, das axial im Wesentlichen konstant ist, wobei der Krümmungsradius Rm größer als 59 mm ist, wobei jedes metallische Monofilament (30) um die Nabe jeder Speicherspule (22) herum aufgewickelt ist,
- Speichern (140) der Mehrzahl von Spulen, wobei jede Spule eine Wicklung eines der metallischen Monofilamente (30) umfasst,
- Abwickeln (210) der Mehrzahl von metallischen Monofilamenten der Mehrzahl von Spulen,
- Anordnen (220) der Mehrzahl von metallischen Monofilamenten parallel zueinander,
- Einbetten (230) der Mehrzahl von metallischen Monofilamenten in eine Elastomermatrix, so dass der Elastomerverbundstoff gebildet wird.

2. Verfahren nach dem vorhergehenden Anspruch, wobei der Krümmungsradius Rm der Nabe (22) größer oder gleich 71 mm, bevorzugt größer oder gleich 76 mm ist.

3. Verfahren nach einem der vorhergehenden Ansprüche, **dadurch gekennzeichnet, dass** der Krümmungsradius Rm der Nabe (22) 80 mm ≤ Rm ≤ 85 mm erfüllt.

4. Verfahren nach einem der vorhergehenden Ansprüche, wobei jedes metallische Monofilament einen Durchmesser Dm von 0,05 mm bis 0,50 mm hat, wobei Dm bevorzugt 0,18 mm bis 0,42 mm beträgt, wobei Dm noch bevorzugter 0,28 mm bis 0,42 mm beträgt.

5. Verfahren nach einem der vorhergehenden Ansprüche, wobei jedes metallische Monofilament einen Kern aus Stahl umfasst.

6. Verfahren nach dem vorhergehenden Anspruch, wobei jedes metallische Monofilament eine Schicht eines metallischen Überzugs umfasst, der den Kern aus Stahl mindestens zum Teil direkt überzieht.

7. Verfahren nach dem vorhergehenden Anspruch, wobei das Metall der Schicht des metallischen Überzugs, der den Kern aus Stahl mindestens zum Teil direkt überzieht, aus Zink, Kupfer, Zinn und den Legierungen dieser Metalle gewählt ist.

8. Verfahren nach einem der vorhergehenden Ansprüche, wobei die Aufwickelspannung jedes metallischen Monofilament (30) auf jeder Spule (20) kleiner oder gleich 1 daN, bevorzugt 0,8 daN, noch bevorzugter 0,6 daN und noch stärker bevorzugt 0,5 daN ist.

9. Verfahren nach einem der vorhergehenden Ansprüche, wobei die Aufwickelgeschwindigkeit jedes metallischen Monofilaments (30) auf jede Spule (20) 30 m.min⁻¹ bis 1200 m.min⁻¹, bevorzugt 50 m.min⁻¹ bis 1000 m.min⁻¹ beträgt.

10. Verfahren nach einem der Ansprüche 1 bis 9, wobei man, wenn jedes metallische Monofilament im Kontakt mit einem Durchlauforgan durchläuft, wobei dieses Durchlauforgan das letzte stromauf jeder Spule (20) in Durchlaufrichtung jedes metallischen Monofilaments angeordnete Durchlauforgan ist, jedes metallische Monofilament (30) auf jede Spule (30) so aufwickelt, dass das Vorzeichen der Krümmung jedes metallischen Monofilaments (30) zwischen dem Durchlauforgan und jeder Spule (30) invertiert wird.

11. Verfahren nach einem der Ansprüche 1 bis 9, wobei man, wenn jedes metallische Monofilament im Kontakt mit einem Durchlauforgan durchläuft, wobei dieses Durchlauforgan das letzte stromauf jeder Spule (20) in Durchlaufrichtung jedes metallischen Monofilaments angeordnete Durchlauforgan ist, jedes metallische Monofilament (30) auf jede Spule (20) so aufwickelt, dass das Vorzeichen der Krümmung jedes metallischen Monofilaments (30) zwischen dem Durchlauforgan und jeder Spule (20) beibehalten wird.

12. Verfahren nach einem der vorhergehenden Ansprüche, wobei das Verfahren vor dem Schritt des Aufwickelns den folgenden Schritt umfasst:
- Drahtziehen (110) der Mehrzahl von metallischen Monofilamenten.

13. Verfahren nach einem der vorhergehenden Ansprüche, wobei, wenn das metallische Monofilament einen Kern aus Stahl umfasst, das Verfahren vor dem Schritt des Aufwickelns den folgenden Schritt umfasst:
- Überziehen (120) des Kerns aus Stahl mindestens zum Teil mit einer Schicht eines metallischen Überzugs.

14. Verfahren nach einem der vorhergehenden Ansprüche, wobei die Elastomermatrix auf Basis einer Zusammensetzung ist, die mindestens ein Elastomer und mindestens einen Füllstoff umfasst.

15. Verfahren zur Herstellung (300) eines Reifenrohlings, **dadurch gekennzeichnet, dass** das Verfahren die folgenden Schritte umfasst:
- Herstellen (200) mindestens eines Elastomerverbundstoffs nach einem Verfahren zur Herstellung (200) eines Elastomerverbundstoffs nach einem der vorhergehenden Ansprüche,
- Aufwickeln (310) des Elastomerverbundstoffs auf eine Aufbautrommel, so dass der Reifenrohling erhalten wird.

## Claims

1. Method (200) for manufacturing an elastomer composite, **characterized in that** the method comprises the following steps of:
- winding (130) a plurality of metal monofilaments (30) with a substantially circular cross section and a diameter Df ranging from 0.05 mm to 6 mm onto a plurality of storage reels (20), each reel having an axis (60) of revolution and comprising a hub (22) that defines a cylindrical gauge (62) with a radius of curvature Rm in the axial plane that is substantially axially constant, said radius of curvature Rm being greater than 59 mm, each metal monofilament (30) being wound around the hub (22) of each storage reel,
- storing (140) the plurality of reels, each reel comprising a winding of one of the metal monofilaments (30),
- unwinding (210) the plurality of metal monofilaments from the plurality of reels,
- disposing (220) the plurality of metal monofilaments parallel to one another,
- embedding (230) the plurality of metal monofilaments in an elastomer matrix so as to form the elastomer composite.

2. Method according to the preceding claim, wherein the radius of curvature Rm of the hub (22) is greater or equal to 71 mm, preferably greater or equal to 76 mm.

3. Method according to either one of the preceding claims, wherein the radius of curvature Rm of the hub (22) satisfies 80 mm ≤ Rm ≤ 85 mm.

4. Method according to either one of the preceding claims, wherein each metal monofilament has a diameter Dm ranging from 0.05 mm to 0.50 mm, preferably Dm ranging from 0.18 mm to 0.42 mm, more preferably Dm ranging from 0.28 mm to 0.42 mm.

5. Method according to either one of the preceding claims, wherein each metal monofilament comprises a steel core.

6. Method according to the preceding claim, wherein each metal monofilament comprises a layer of a metal coating directly coating at least part of the steel core.

7. Method according to the preceding claim, wherein the metal of the layer of the metal coating directly coating at least part of the steel core is chosen from zinc, copper, tin and the alloys of these metals.

8. Method according to any one of the preceding claims, wherein the winding tension of each metal monofilament (30) on each reel (20) is less than or equal to 1 daN, preferably 0.8 daN, more preferably 0.6 daN and even more preferably 0.5 daN.

9. Method according to any one of the preceding claims, wherein the winding speed of each metal monofilament (30) onto each reel (20) is from 30 m.min⁻¹ to 1200 m.min⁻¹, preferably from 50 m.min⁻¹ to 1000 m.min⁻¹.

10. Method according to any one of Claims 1 to 9, wherein, with each metal monofilament running in contact with a running member, this running member being the last running member arranged upstream of each reel (20) in the running direction of each metal monofilament, each metal monofilament (30) is wound onto each reel (30) so as to reverse the sign of the curvature of each metal monofilament (30) between the running member and each reel (30).

11. Method according to any one of Claims 1 to 7, wherein, with each metal monofilament running in contact with a running member, this running member being the last running member arranged upstream of each reel (20) in the running direction of each metal monofilament, each metal monofilament (30) is wound onto each reel (20) so as to maintain the sign of the curvature of each metal monofilament (30) between the running member and each reel (20).

12. Method according to any one of the preceding claims, wherein the method comprises, upstream of the winding step, the following step of:
- drawing (110) the plurality of metal monofilaments.

13. Method according to any one of the preceding claims, wherein, with the metal monofilament comprising a steel core, the method comprises, upstream of the winding step, the following step of:
- coating (120) at least part of the steel core with a layer of a metal coating.

14. Method according to any one of the preceding claims, wherein the elastomer matrix is based on a composition comprising at least one elastomer and at least one filler.

15. Method (300) for manufacturing a green tyre, **characterized in that** the method comprises the following steps of:
- manufacturing (200) at least one elastomer composite by way of a method (200) for manufacturing an elastomer composite according to one of the preceding claims,
- winding (310) the elastomer composite onto a tyre building drum so as to obtain the green tyre.
